(19) Europäisches Patentamt
European Patent Office
Office européen des brevets

(11) Veröffentlichungsnummer: **0 197 349**
**A1**

(12) # EUROPÄISCHE PATENTANMELDUNG

(21) Anmeldenummer: **86103387.6**

(22) Anmeldetag: **13.03.86**

(51) Int. Cl.⁴: **C 09 D 3/72**
B 05 D 5/00, B 05 D 7/02
C 08 J 7/04

(30) Priorität: **15.03.85 DE 3509322**

(43) Veröffentlichungstag der Anmeldung:
**15.10.86 Patentblatt 86/42**

(84) Benannte Vertragsstaaten:
**DE FR GB IT SE**

(71) Anmelder: **Herberts Gesellschaft mit beschränkter Haftung**
**Christbusch 25**
**D-5600 Wuppertal 2(DE)**

(72) Erfinder: **Gruner, Christian, Dr. Dipl.-Chem.**
**Cronenberger Strasse 130**
**D-5650 Solingen 1(DE)**

(72) Erfinder: **Lange, Petra**
**Sonnabendstrasse 8**
**D-5600 Wuppertal 2(DE)**

(72) Erfinder: **Müller, Jürgen**
**Am Lohsiepen 176**
**D-5600 Wuppertal 21(DE)**

(74) Vertreter: **Türk, Dietmar, Dr. rer. nat. et al,**
**Türk, Gille + Hrabal Patentanwälte Bruckner Strasse 20**
**D-4000 Düsseldorf 13(DE)**

(54) **Verwendung von einem Lack zum Schutz von Kunststoffteilen von Kraftfahrzeugen und Verfahren zum Beschichten der Kunststoffteile.**

(57) Beschrieben wird die Verwendung eines Lacks auf Basis von hydroxylfunktionellen Kunstharzen und Polyisocyanaten als Bindemittel mit einem Gehalt von 5 bis 100 Gew.-%, bezogen auf das Gewicht des Bindemittels, Gummimehl mit einer Teilchengröße unter 150 $\mu$m und gegebenenfalls sonstigen üblichen Zusatzstoffen zum Schutz von Kunststoffteilen von Kraftfahrzeugen gegen Steinschlag. Beschrieben wird auch das Verfahren zum Beschichten von Kunststoffteilen von Kraftfahrzeugen mit diesem Lack.

EP 0 197 349 A1

Croydon Printing Company Ltd.

ANMELDER: HERBERTS Gesellschaft mit beschränkter Haftung, Christbusch 25, D-5600 WUPPERTAL 2

Verwendung von einem Lack zum Schutz von Kunststoffteilen von Kraftfahrzeugen und Verfahren zum Beschichten der Kunststoffteile

Der Schutz von Kraftfahrzeugkarosserie -Außenteilen gegen Steinschlag hat eine erhebliche technische Bedeutung . Hierbei ist nicht nur der Schutz von lackierten Metallteilen erforderlich, sondern infolge der zunehmenden Verwendung von Kraftfahrzeug-Außenteilen aus Kunststoffen auch der Schutz dieser Stoffteile gegen Steinschlag. In der DE-A 33 37 394 ist ein Steinschlagschutzschicht-Lack beschrieben, der übliche Pigmente und Füllstoffe enthält, und gute Ergebnisse gibt. Steinschlagschutzschicht-Lacke und überhaupt Lacke für Kraftfahrzeuge auf Basis von verschiedenen Bindemitteln sind in großer Zahl bekannt, vgl. u.a. die EP-A-59 962. Der vorliegenden Erfindung liegt die Aufgabenstellung zugrunde, den Schutz von insbesondere Kunststoffteilen gegen Steinschlag zu verbessern.

Es wurde nun gefunden, daß diese Aufgabenstellung dadurch gelöst werden kann, daß hierfür ein Lack verwendet wird auf Basis eines bekannten Gemisches aus hydroxyfunktionellen Kunstharzen und -gegebenenfalls blockierten- Polyisocyanaten als Bindemittel, der Gummimehl enthält.

Gegenstand der Erfindung ist demgemäß die Verwendung von einem Lack auf Basis von hydroxyfunktionellen Kunstharzen und Polyisocyanaten als Bindemittel mit einem Gehalt von 5 bis 100 Gew.-%, bezogen auf das Gewicht

des Bindemittels, Gummimehl mit einer Teilchengröße unter 150 /um und gegebenenfalls sonstigen üblichen Zusatzstoffen zum Schutz von Kunststoffteilen von Kraftfahrzeugen gegen Steinschlag.

Weiterhin ist Gegenstand der Erfindung ein Verfahren zum Beschichten von Kunststoffteilen von Kraftfahrzeugen mit einem Lack auf Basis von hydroxyfunktionellen Kunstharzen und Polyisocyanaten als Bindemittel sowie gegebenenfalls üblichen Zusatzstoffen, das dadurch gekennzeichnet ist, daß die Beschichtung mit einem Lack erfolgt, der, bezogen auf das Gewicht des Bindemittels, 5 bis 100 Gew.-% Gummimehl mit einer Teilchengrößen von weniger als 150 /um enthält.

Der Lack gemäß der Erfindung enthält als Bindemittel ein Gemisch aus filmbildenden, hydroxygruppenhaltigen Polyestern und Polyisocyanaten. Solche Gemische sind aus dem Stand der Technik bekannt, vgl. die oben erwähnte DE-A 37 37 394, sowie DE-A 25 50 156, 26 23 081, 26 39 491, 26 40 295 und 30 01 060, um nur einige Beispiele zu nennen. Besonders zweckmäßig ist es, daß die Bindemittel hochelastische Filme ergeben, da spröde Filme empfindlicher gegenüber Steinschlag sind. Die gemäß der Erfindung verwendeten hydroxygruppenhaltigen Polyester werden in an sich bekannter Weise durch Polykondensation von Säuren mit Alkoholen hergestellt. Als Säuren werden diejenigen verwendet, wie sie zur Herstellung von hydroxygruppenhaltigen Polyestern üblicherweise eingesetzt werden, die als Bindemittel für die Automobilindustrie dienen. Die Hauptkomponenten sind Benzolcarbonsäuren, insbesondere Benzoldicarbonsäuren, die im Gemisch mit aliphatischen und/oder cycloaliphatischen Dicarbonsäuren, gegebenenfalls auch im Gemisch mit Monocarbonsäuren eingesetzt werden. Als Benzolcarbonsäuren können Mono-, Di- und gegebenenfalls

Tri- und Tetracarbonsäuren verwendet werden. Bevorzugt sind Benzoldicarbonsäuren, d.h. Phthalsäure und deren Isomeren (Isophthalsäure, Terephthalsäure und deren Methylester bzw. Anhydride). In geringen Mengen können zusätzlich Trimellithsäure und/oder Pyromellithsäure eingesetzt werden. Große Mengen dieser Säuren sind nicht bevorzugt, weil dann eine zu starke Vernetzung eintritt. Außerdem sind diese Säuren relativ schwer zugänglich und deshalb teuer. Als aromatische Monocarbonsäuren sind z.B. Benzoesäure und p-tert..Butylbenzoesäure geeignet.

Als aliphatische oder cycloaliphatische Dicarbonsäuren bzw. deren Anhydride sind z.B. Sebazinsäure, Azelainsäure, Adipinsäure, Maleinsäure, Fumarsäure, Itaconsäure, die Isomeren der Tetra- und Hexahydrophthalsäure, dimere und trimere Fettsäuren geeignet.

Als Monocarbonsäuren kommen sowohl aliphatische als auch aromatische Verbindungen in Frage. Besonders geeignete Monocarbonsäuren sind z.B. Pelargonsäure, Isononansäure, 2-Ethylhexansäure, Kokosvorlauffettsäure, natürliche, in Form von Ölen und Fetten vorkommende Säuren, z.B. Leinölfettsäure, Sojafettsäure, Rizinusfettsäure, Kokosfettsäure sowie chemische Derivate dieser Fettsäuren, z.B. Rizinenfettsäure. Anstatt der Fettsäuren können auch die Öle oder Fette für die Herstellung dieser speziellen Polyester verwendet werden.

Als Alkohole werden ebenfalls die auf diesem technischen Gebiet üblichen aliphatischen und/oder cycloaliphatischen Polyole mit 2 bis 4 Hydroxylgruppen pro Molekül eingesetzt. Beispiele hierfür sind Butandiol-1,2, Butandiol-1,3, Butandiol-1,4, Neopentylglykol, Ethylenglykol, Propandiol-1,2, Propandiol-1,3, Di- und Triethylenglykol, Polyethylenglykole mit Molekulargewichten bis 2000, Di- und Tripropylenglykol -abgeleitet von Propandiol-1,2, von letzterem abgeleitete Polypropylenglykole mit Molekulargewichten bis 2000, Glyzerin, Trimethylolpropan, Hexandiol-1,6, Polycapralactonpolyole mit Molekulargewichten bis 2000, Pentaerythrit, Dipentaerythrit, Hydroxypivalinsäureneopentylglykolester, 2-Ethylenhexandiol-1,3, Rizinusöl, Trimethylolethan, Trimethylpentandiol-1,3, Fettsäuremonoglyzeride.

Zweckmäßig haben die Polyester eine mittlere Hydroxyfunktionalität von 2 bis 6. Darunter wird verstanden, daß im statistischen Mittel jedes Polyestermolekül 2 bis 6 Hydroxylgruppen aufweist. Polyester mit einer derartigen Hydroxyfunktionalität werden durch Auswahl der Carbonsäuren und Polyole und deren Funktionalität in für den Fachmann bekannter Weise erhalten. Die prinzipiellen Grundlagen für die Herstellung und Berechnung von Alkyd- und Polyesterharzen sind ausführlich beschrieben in: T.C. Patton, Alkyd Resin Technology, Interscience Publ. 1962, New York - London.

Zur Erzielung elastischer Überzüge ist es zweckmäßig, daß die hydroxyfunktionellen Kunstharze, vorzugsweise Polyester, einen wesentlichen Gehalt an aliphatischen Gruppen von z.B. 15 bis 50 Gew.-% aufweisen. Diese aliphatischen Gruppen enthalten mindestens 4 bis 20 Kohlenstoffatome in einer unverzweigten Kette. Dieser Gehalt wird im Sinne der Erfindung als "Aliphaten-Gehalt" definiert. Bevorzugt enthalten die aliphatischen Gruppen 4 bis 18, besonders bevorzugt 4 bis 12 Kohlenstoffatome in einer unverzweigten Kette. Für die Berechnung des Aliphaten-Gehaltes werden aber nicht nur diese unverzweigten Ketten zugrunde gelegt, sondern auch alle direkt an diese Kette gebundenen Alkylreste, sofern solche vorliegen. Beispielsweise enthält ein Polyester, hergestellt aus den Bestandteilen

146 g Adipinsäure
148 g Phthalsäureanhydrid
408 g Pentaerythrit
534 g p-tert. Butylbenzoesäure
432 g 2-Ethylhexansäure,

wobei bis zu einer Säurezahl von weniger als 2 kondensiert wurde, 23.4 Gew.-% Aliphaten und 20.2 Gew.-% Aromaten. Das Gewichtsverhältnis von Aliphaten- zu Aromatengehalt beträgt 1.16.

Es ist weiterhin zweckmäßig, daß zwischen dem Aliphaten-Gehalt und dem Aromaten-Gehalt innerhalb der hydroxyfunktionellen Kunstharze und insbesondere der Polyester ein bestimmtes Gewichtsverhältnis, nämlich von 1 bis 2.5, bevorzugt 1 bis 2.3 , besonders bevorzugt von 1 bis 2.1 eingehalten wird.

Unter Aromaten-Gehalt wird in diesem Sinne verstanden die Summe des Gewichts der Kohlenstoffatome der Benzolringe und der an diese Kohlenstoffatome gebundenen Wasserstoffatome, die im Polyester in Form von Benzolringen vorliegen.

Die Kunstharze, insbesondere Polyester haben zweckmäßig ein rechnerisches, mittleres Molekulargewicht von 500 bis 10000, bevorzugt 500 bis 6000, besonders bevorzugt 500 bis 4000.

Andere Beispiele für hydroxyfunktionelle Kunstharze neben den Polyestern sind Polyether, Copolymere der Acryl- und der Methacrylsäure, des Vinylalkohols sowie insbesondere von Derivaten der genannten Monomeren.

Die hydroxyfunktionellen Kunstharze werden im Gemisch mit Isocyanaten verwendet. Es können die auf diesem

technischen Gebiet bekanntlich eingesetzten bzw. üblichen Polyisocyanate verwendet werden, die aromatischer, aliphatischer und/oder cycloaliphatischer Natur sind. Bevorzugt sind aliphatische und/oder cycloaliphatische Polyisocyanate, da diese elastische Schichten geben. Da die Kunststoffteile der Kraftfahrzeuge in der Regel temperaturempfindlich sind und in vielen Fällen Temperaturen über etwa 120°C nicht ausgesetzt werden dürfen, ist es bevorzugt, daß gemäß der Erfindung nichtblockierte Polyisocyanate eingesetzt werden, da diese bei niedrigen Temperaturen unter 100°C bereits schnell und vollständig mit den hydroxyfunktionellen Kunstharzen reagieren. Wenn jedoch die Kunststoffteile auch höheren Temperaturen ausgesetzt werden können, z.B. bis etwa 130°C, können auch entsprechende blockierte Polyisocyanate eingesetzt werden, vgl. z.B. DE-A 33 37 394 und die anderen oben erwähnten Veröffentlichungen. Beispiele für geeignete Polyisocyanate sind Hexamethylendiisocyanat, Tirmethylhexamethylendiisocyanat, 3-Isocyanatmethyl-3,5,5-trimethylcyclohexylisocyanat, Dicyclohexylmethandiisocyanat sowie übliche Präaddukte der genannten Isocyanate mit mehrfunktionellen Alkoholen oder auf andere Weise aus diesen erhaltene übliche höhermolekulare Isocyanatverbindungen. Polyisocyanate sind in großem Umfang im Handel erhältlich, z.B. unter dem Warenzeichen Desmodur. Das Mengenverhältnis zwischen hydroxyfunktionellen Bindemitteln und -gegebenenfalls blockiertem - Polyisocyanat ist zweckmäßig so zu wählen, daß auf ein Äquivalent Hydroxylgruppen mindestens 0.5 Äquivalente und höchstens 2 Äquivalente Isocyanatgruppen entfallen. Besonders bevorzugt sind 0.8 bis 1.3 Äquivalente Isocyanatgruppen pro Äquivalent Hydroxylgruppen. Die Zahl der Isocyanatgruppen pro Molekül des Polyisocyanats beträgt etwa 2 bis 4, wie dies auf diesem technischen Gebiet bekannt ist, zweckmäßig 2 oder 3.

Wie vorstehend ausgeführt, ist auch die Verwendung blockierter Isocyanate möglich, wenn die Kunststoffteile höheren Temperaturen ausgesetzt werden können. Es sind dann die blockierten Isocyanate bevorzugt, die beispielsweise nach der DE-A 33 37 394 verwendet werden können. Es sind das blockierte Polyisocyanat, deren Isocyanatkomponente aliphatischer und/oder cycloaliphatischer Natur ist. So wird z.B. in der DE-A-26 12 783 die Blockierung der Verbindung

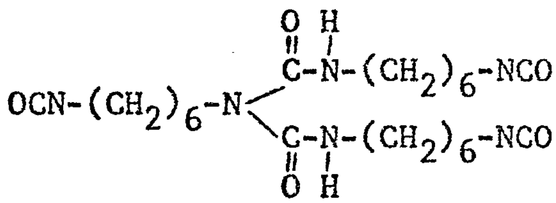

mit Acetessigsäurealkylester beschrieben. Ebenfalls geeignete blockierte Polyisocyanate sind solche, deren Herstellung in der DE-A-25 50 156 beschrieben ist, sofern als Blockierungsmittel mit gegenüber Isocyanatgruppen reaktiven Methylengruppen Acetessigsäurealkylester verwendet werden und die mittlere Funktionalität der verwendeten Isocyanatverbindung mindestens 2.5 beträgt.

Weitere Patentschriften, welche die Herstellung von blockierten Polyisocyanaten beschreiben, wie sie nach DE-A-33 37 394 und somit erfindungsgemäß verwendet werden können, sind DE-A-26 23 081, DE-A-26 39 491 und DE-A-26 40 295. Ferner können auch blockierte Polyisocyanate, deren Herstellung in der DE-A-30 01 060 beschrieben ist, verwendet werden, sofern als Blockierungsmittel Acetessigsäurealkylester eingesetzt wird und das über Isocyanuratring(e) oligomerisierte Diisocyanat aliphatischer und/oder cycloaliphatischer Natur ist.

Die Lacke gemäß der Erfindung enthalten organische Lösungsmittel, zweckmäßig aromatische Kohlenwasserstoffe wie Xylol, Solvesso 100 (Esso) (eingetragenes Warenzeichen), Glykolester wie Ethylglykolacetat, Ester wie Butylacetat, Alkohole wie Isopropanol, Ether wie Ethylenglykoldimethylether oder andere Lösungsmittel, welche die Bindemittel zu lösen vermögen, wobei als Lösungsmittel eine der beschriebenen Verbindungen als Einzelsubstanz oder ein Gemisch der genannten Substanzen verwendet werden kann.

Der gemäß der Erfindung verwendete Lack enthält auf 100 Gewichtsteile Bindemittel, d.h. Gesamtmenge von hydroxyfunktionellem Kunstharz und -gegebenenfalls blockiertem-Isocyanat, etwa 20 bis 200 Gewichtsteile Lösungsmittel, vorzugsweise etwa 40 bis 120 Gewichtsteile Lösungsmittel.

Außerdem kann der gemäß der Erfindung verwendete Lack übliche Zusatzstoffe enthalten, wie Siliconöle oder niedermolekulare Acrylpolymere (Verlaufmittel), Pigmentbenetzungsmittel (Sojalecithin), Epoxidharze, Weichmacher (Palathinol C, eingetragenes Warenzeichen), Tixotropierungsmittel wie Aerosil, Bentone (eingetragenes Warenzeichen); Katalysatoren wie zinkorganische Verbindungen.

Weiterhin kann der Lack Pigmente und Füllstoffe enthalten, um einen gewünschten Farbton oder Deckkraft zu erzielen. Insofern wird ebenfalls auf den Stand der Technik verwiesen.

Der Lack wird gemäß der Erfindung in solcher Menge auf die Kunststoff-Außenteile von Kraftfahrzeugen aufgetragen, daß eine Trocken-Schichtdicke von zweckmäßig 15 bis 100 µm, vorzugsweise 40 bis 75 µm erzielt wird.

Wesentlicher Bestandteil des gemäß der Erfindung verwendeten Lackes ist das Gummimehl. Darunter werden die üblichen Naturkautschuke oder kautschukartige Polymere verstanden. Zweckmäßig wird das Gummimehl in einer Menge von mindestens 5 Gew.-%, bevorzugt 10 Gew.-%, bezogen auf das Gesamtgewicht des Bindemittels eingesetzt. Die obere Grenze liegt zweckmäßig bei etwa 100 Gew.-%, stärker bevorzugt bei etwa 70 Gew.-%, etwa 30 Gew.-% und/oder bei etwa 25 Gew.-%.

Ein übermäßig großer Anteil an extrem feinem Korn sowie extrem großem Korn ist im Gummimehl zu vermeiden. Es ist deshalb bevorzugt, daß das eingesetzte Gummimehl zu mindestens 80 Gew.-% aus Teilchen mit einer Teilchengröße im Bereich von 5 bis 150 $\mu m$ besteht. Die untere Grenze dieser Teilchen liegt bevorzugt bei etwa 10 $\mu m$. Die obere Grenze liegt zweckmäßig bei etwa 120 $\mu m$, bevorzugt bei etwa 80 $\mu m$.

Die gemäß der Erfindung erzielten Steinschlagschutzschichten lassen sich besonders gut mit anderen Beschichtungen überlackieren, wie sie auf dem Kraftfahrzeug-Gebiet bekannt sind. Dies kann, wie auf diesem technischen Gebiet bekannt, auch naß-in-naß erfolgen. In der Regel wird aber gemäß der Erfindung der Steinschlagschutzschichtfilm soweit getrocknet, daß er staubtrocken ist. Er kann dann in beliebiger Weise überlackiert werden. Beispiele für solche zum Überlackieren eingesetzten Systeme sind Metallic-Lacke (einschließlich Zweischichtlackierungen aus Basis- und Decklack) oder Uni-Decklacke.

Es ist auch möglich, daß die Kunststoffteile zunächst mit einem üblichen Haftgrund lackiert werden. Beispiele für solche Haftgründe sind Chlorpolyolefinprimer für Polypropylenkunststoffe.

Wie vorstehend ausgeführt wurde, können erfindungsgemäß auch Lacke auf der Basis blockierter Polyisocyanate verwendet werden, wenn die zu schützenden Kunststoffteile auch höheren Temperaturen, z.B. bis etwa 130°C, ausgesetzt werden können. Derartige Lacke werden in der DE-A-33 37 394 beschrieben, auf die hier Bezug genommen wird. Es handelt sich dabei um Steinschlagschutzschicht-Lacke, die Pigmente und Füllstoffe enthalten können. Sie enthalten als Bindemittel ein Gemisch aus filmbildenden, hydroxylgruppenhaltigen Polyestern und mit Acetessigsäurealkylester, deren Alkylgruppen Methyl-, Ethyl-, n-Propyl-, i-Propyl-, n-Butyl-, i-Butyl- oder sec.-Butylgruppen sind, blockierten aliphatischen und/oder cycloaliphatischen Polyisocyanaten mit einer durchschnittlichen Funktionalität von mindestens 2.5, organische Lösungsmittel, sowie übliche Lackzusatzstoffe. Die Lacke enthalten als hydroxylgruppenhaltige Polyester verzweigte Polyester, die erhältlich sind aus Benzolcarbonsäuren sowie aliphatischen und/oder cycloaliphatischen Dicarbonsäuren, gegebenenfalls im Gemisch mit Monocarbonsäuren, sowie aliphatischen und/oder cycloaliphatischen Polyolen mit 2 bis 4 Hydroxylgruppen pro Molekül, wobei die Polyester eine mittlere Hydroxylfunktionalität von 2.5 bis 6, einen Hydroxylgehalt von 2 bis 6 Gew.-%, und einen Gehalt an aliphatischen Gruppen, die mindestens 4 bis 20 Kohlenstoffatome in einer unverzweigten Kette enthalten, von 15 bis 50 Gew.-% (Aliphaten-Gehalt) aufweisen, und wobei das Gewichtsverhältnis von dem Gehalt an diesen im Polyester vorliegenden aliphatischen Gruppen zu dem Gehalt an im Polyester vorliegenden Benzolringen, gerechnet als Summe des Gewichts der Kohlenstoffatome der Benzolringe und der an diese Kohlenstoffatome gebundenen Wasserstoffatome (Aromaten-Gehalt), 1 bis 2.5 beträgt.

Derartige Polyisocyanate und Polyole wurden u.a. vorausgehend beschrieben.

Der Hydroxylgehalt der Polyester von 2 bis 6 Gew.-% wird zunächst als Hydroxylzahl bestimmt, wie in der Deutschen Norm vom Dezember 1971 DIN 53240 beschrieben. Eine Division der Hydroxylzahl mit 33 liefert den Gehalt an Hydroxylgruppen in Gew.-% im Harz.

Für schleifbare Steinschlagschutzschichten aus den bevorzugten Lacken nach der DE-A-33 37 394 mit Füllereigenschaften, welche direkt mit Decklack überlackiert werden, ist es bevorzugt, daß die verwendeten Polyester eine Hydroxylfunktionalität von über 3.5, bevorzugt über 4.5 aufweisen, und daß das Verhältnis von Aliphaten-Gehalt zu Aromaten-Gehalt unter 1.8, bevorzugt unter 1.5 liegt.

Das Mengenverhältnis zwischen Polyester und blockiertem Isocyanat ist zweckmäßig so zu wählen, daß auf ein Äquivalent Hydroxylgruppen mindestens 0.5 Äquivalente und höchstens 2 Äquivalente geblockter Isocyanatgruppen kommen. Besonders bevorzugt sind 0.8 bis 1.3 Äquivalente geblockter Isocyanatgruppen oder Isocyanatkomponente pro Äquivalent Hydroxylgruppen der Polyesterkomponente.

Als organische Lösungsmittel für die Lacke gemäß DE-A-33 37 394 werden zweckmäßig aromatische Kohlenwasserstoffe wie Xylol, Solvesso 100 (Esso) (eingetragenes Warenzeichen) , Glykolester wie Ethylglykolacetat, Ester wie Butylacetat, Alkohole wie Isopropanol, Ether wie Ethylenglykoldimethylether oder andere Lösungsmittel, welche die Bindemittel zu lösen vermögen, wobei als Lösungsmittel eine der beschriebenen Verbindungen als Einzelsubstanz oder ein Gemisch der genannten Substanzen verwendet werden kann. Der Steinschlagschutzschicht-Lack

enthält auf 100 Gew.-Teile Bindemittel, d.h. Gesamtmenge von Polyester und blockiertem Isocyanat, etwa 10 bis 50 Gew.-Teile Lösungsmittel, vorzugsweise etwa 15 bis 35 Gew.-Teile Lösungsmittel.

Zur Herstellung dieser Steinschlagschutzschicht-Lacke mit dem erfindungsgemäßen Gehalt an Gummimehl kann beispielsweise das Gummimehl in die filmbildenden hydroxylgruppenhaltigen Polyester bei Temperaturen von über etwa 40°C, vorzugsweise über etwa 60°C eindispergiert und danach bei Temperaturen unter etwa 45°C die blockierten Polyisocyanate und gegebenenfalls sonstigen Zusatzstoffe eingerührt werden.

Anhand der folgenden Beispiele wird die Erfindung weiter erläutert.

## HERSTELLUNGSBEISPIEL A

Folgende Bestandteile werden eingewogen und 20 min unter einem hochtourigen Rührwerk (Dissolver) dispergiert:

| | | | |
|---|---|---|---|
| 60 | Gew.-Teile | | Polyol (Desmophen 670, eingetragenes Warenzeichen der Bayer AG), |
| 0.5 | " | " | Thixotropierungsmittel (Bentonit, 10%iger Aufschluß, Bentone 38, Warenzeichen der Kronos GmbH), |
| 1 | " | " | feinverteiltes Siliziumdioxid (Aerosil 972, Warenzeichen der Degussa), |
| 24 | " | " | Gummimehl (mehr als 80 Gew.-% 10 bis 120 µm) (V 242 CT, Warenzeichen der Rhode, Hamburg), |
| 4.8 | " | " | Ethylglykolacetat |
| 10 | " | " | Butylacetat |
| 100.0 | Gew.-Teile | | |

Auf diese Weise wurde ein Steinschlagschutzfüller hergestellt.

HERSTELLUNGSBEISPIEL B

Zu Vergleichszwecken wurde ein Schutzfüller hergestellt. Dabei wurde wie im Herstellungsbeispiel A vorgegangen, jedoch wurde anstelle des Gummimehls ein Gemisch von

| | |
|---|---|
| 15 Gew.-Teilen | Titandioxid (Cl 110, Warenzeichen der Kronos GmbH) |
| | und |
| 9 Gew.-Teile | Bariumsulfat (Blancfixe N, Warenzeichen der Schachtleben) |

also insgesamt ebenfalls 24 Gew.-Teile wie im Herstellungsbeispiel A eingesetzt.

HERSTELLUNGSBEISPIEL C

Zur Herstellung eines weißen Decklacks wurden folgende Bestandteile eingewogen und 20 min bei 21 m/sec bei Temperaturen bis zu 50$^{o}$C auf einem Dissolver dispergiert:

| | | |
|---|---|---|
| 22 | Gew.-Teile | Polyol (Desmophen 670,Warenzeichen der Bayer AG), |
| 0.5 " | " | Thixotropierungsmittel (Bentonit, Bentone 38, Warenzeichen der Kronos GmbH), |
| 1 " | " | feinverteiltes Siliziumdioxid (Aerosil 972, Warenzeichen der Degussa), |
| 35 " | " | Titandioxid (Cl 110, Warenzeichen der Kronos GmbH) |

Anschließend wurden unter Rühren noch folgende Bestandteile zugesetzt:

| | | |
|---|---|---|
| 25 Gew.-Teile | | Polyol (Desmophen 670, Warenzeichen der Bayer AG), |
| 16.5 " | " | Ethylglykolacetat |
| 100.0 Gew.-Teile | | |

BEISPIEL

Herstellung des erfindungsgemäßen Lacks :

Der Steinschlagschutzfüller des Herstellungsbeispiels A wird im Gewichtsverhältnis 3:1 mit Diisocyanat (Desmodur N 75, Warenzeichen der Bayer AG) vermischt und mit 35 Gew.-% Butylacetat, bezogen auf die Menge des Steinschlagschutzfüllers und des Diisocyanats, verdünnt. Die so erhaltene Mischung wird mit einer Lackspritzpistole auf beflammte Kunststoffplatten aufgespritzt und 15 min lang bei 80°C in einem Labor-Lacktrockner gehärtet, derart daß eine Trockenfilmdicke von 60 µm erzielt wird.

Die Kunststoffplatten waren Prüfplatten aus Hostalen PPN 7118 (Warenzeichen der Hoechst AG) , die mit einem mit Isopropanol getränkten Lappen gereinigt und anschließend mit einer oxidierenden Bunsenbrennergasflamme bestrichen wurden.

Der Decklack des Herstellungsbeispiels C wird im Verhältnis von 4:1 Gew.-Teilen mit Diisocyanat (Desmodur N 75, Warenzeichen der Bayer AG) vermischt und mit 20 Gew.-% Butylacetat, bezogen auf die Gewichtsmenge der Decklack-Härter-Mischung verdünnt. Der so erhaltene spritzfertige Lack wird auf die wie vorstehend beschrieben beschichteten Platten im Spritzverfahren aufgebracht und 45 min lang bei

einer Umlufttemperatur von 80°C derart getrocknet, daß sich eine Decklacktrockenschichtstärke von 30 µm ausbildet. Anschließend werden die Platten 7 Tage bei Raumtemperatur gealtert.

Vergleichsversuch:

Zu Vergleichszwecken werden die vorstehend beschriebenen Prüfplatten mit dem Vergleichsfüller des Herstellungsbeispiels B und mit Decklack beschichtet. Dabei wird wie im vorstehenden Beispiel beschrieben vorgegangen, wobei jedoch statt des Steinschlagschutzfüllers des Herstellungsbeispiels A der Vergleichsfüller des Herstellungsbeispiels B verwendet wird.

Die im Beispiel und im Vergleichsversuch erhaltenen Platten werden 35 min lang in einem Steinschlagprüfgerät nach der Daimler-Benz Prüfvorschrift Nr. 44 (LPV) unter folgenden Bedingungen mit Splitt beschossen:

Moränensplittmit einer Korngröße von 5 bis 8 mm

Der Split wird bei einem Abstand vom Rohrausgang zur Prüfplatte von etwa 200 mm mit einem Druck von 0.6 bar gegen die Probeplatte geschleudert.

Die Platten des erfindungsgemäßen Beispiels weisen lediglich einen Materialabtrag innerhalb der Decklackschicht auf (Kennwert 1 gemäß DIN 53 23o).
Bei den im Vergleichsversuch hergestellten Platten ist stellenweise unter der vollständig abgetragenen Lackschicht der Kunststoff durch den Beschuß abgegriffen (Kennwert 5).

Anmelder: HERBERTS Gesellschaft mit beschränkter Haftung, Christbusch 25, D-5600 WUPPERTAL 2

Patentansprüche:

1.) Verwendung von einem Lack auf Basis von hydroxyfunktionellen Kunstharzen und Polyisocyanaten als Bindemittel mit einem Gehalt von 5 bis 100 Gew.-%, bezogen auf das Gewicht des Bindemittels, Gummimehl mit einer Teilchengröße unter 150 $\mu$m und gegebenenfalls sonstigen üblichen Zusatzstoffen zum Schutz von Kunststoffteilen von Kraftfahrzeugen gegen Steinschlag.

2.) Verwendung nach Anspruch 1, dadurch gekennzeichnet, daß der Gehalt an Gummimehl 10 bis 70 Gew.-% beträgt.

3.) Verwendung nach Anspruch 1 oder 2, dadurch gekennzeichnet, daß 80 Gew.-% des Gummimehls aus Teilchen mit einer Teilchengröße von 5 bis 150 $\mu$m bestehen.

4.) Verwendung nach Anspruch 1 oder 2, dadurch gekennzeichnet, daß 80 Gew.-% des Gummimehls aus Teilchen mit einer Teilchengröße von 10 bis 120 $\mu$m bestehen.

5.) Verfahren zum Beschichten von Kunststoffteilen von Kraftfahrzeugen mit einem Lack auf Basis von hydroxyfunktionellen Kunstharzen und Polyisocyanaten als Bindemittel sowie gegebenenfalls üblichen Zusatzstoffen, dadurch gekennzeichnet, daß die Beschichtung mit einem Lack erfolgt, der, bezogen auf das Gewicht des Bindemittels, 5 bis 100 Gew.-% Gummimehl mit einer Teilchengröße von weniger als

150 /um enthält.

6.) Verfahren nach Anspruch 5, dadurch gekennzeichnet, daß die Beschichtung mit einem Lack erfolgt, der bezogen auf das Gewicht des Bindemittels, 10 bis 70 Gew.-% Gummimehl enthält.

7.) Verfahren nach Anspruch 5 oder 6, dadurch gekennzeichnet, daß die Beschichtung mit einem Lack erfolgt, in dem 80 Gew.-% des Gummimehls aus Teilchen mit einer Teilchengröße von 5 bis 150 /um bestehen.

8.) Verfahren nach Anspruch 5 oder 6, dadurch gekennzeichnet, daß die Beschichtung mit einem Lack erfolgt, in dem 80 Gew.-% des Gummimehls aus Teilchen mit einer Teilchengröße von 10 bis 120 /um bestehen.

Europäisches Patentamt

**EUROPÄISCHER RECHERCHENBERICHT**

0197349

Nummer der Anmeldung

EP 86 10 3387

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 005 473 (BAYER) * Anspruch 1; Seite 7, Zeilen 14-28 * --- | 1,2,5 | C 09 D 3/72<br>B 05 D 5/00<br>B 05 D 7/02<br>C 08 J 7/04 |
| A | US-A-4 426 488 (R.J. WYMAN) * Anspruch 1; Spalte 1, Zeilen 12-15; Spalte 5, Zeilen 37-57 * ----- | 1 | |
| | | | **RECHERCHIERTE SACHGEBIETE (Int. Cl.4)** |
| | | | C 09 D<br>C 08 L<br>B 05 D<br>C 08 J |

Der vorliegende Recherchenbericht wurde für alle Patentansprüche erstellt

| Recherchenort | Abschlußdatum der Recherche | Prüfer |
|---|---|---|
| DEN HAAG | 17-07-1986 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82